# EUROPÄISCHE PATENTSCHRIFT

(11) **EP 0 862 850 B1**
(45) Veröffentlichungstag und Bekanntmachung des Hinweises auf die Patenterteilung: **07.05.2003**
(21) Anmeldenummer: 98103561.1
(22) Anmeldetag: 28.02.1998
(51) Int. Cl.: A01F 12/30

(54) **Mähdrescher**
Combine
Moissonneuse-batteuse

(30) Priorität: 07.03.1997 DE 19709396
(43) Veröffentlichungstag der Anmeldung: 09.09.1998
(73) Patentinhaber: DEERE & COMPANY, Moline, Illinois 61265-8098 (US)
(72) Erfinder: Preece, David, Nottingham NG13 9QA (GB)
(74) Vertreter: Magin, Ludwig Bernhard

(56) Entgegenhaltungen:
- DE-A- 4 209 020
- DE-B- 1 301 602
- FR-A- 2 192 757
- FR-A- 2 342 022
- NL-A- 6 903 708
- DATABASE WPI Section PQ, Week 9218 Derwent Publications Ltd., London, GB; Class P12, AN 92-148629 XP002064934 & SU 1 664 167 A (MOSC AGRIC PROD ENG)

## Beschreibung

Die Erfindung betrifft einen Mähdrescher mit Strohschüttlern und einem oberhalb der Strohschüttler vorgesehenen Rotationsabscheider.

Die DE-OS-1 904 406 offenbart einen Mähdrescher mit einem unterschlächtig fördernden Zinkenrotor oberhalb von Strohschüttlern. Dieser Zinkenrotor setzt sich aus einem Rotorgehäuse, einer darin exzentrisch gelagerten Welle und auf der Welle drehbar gelagerten und sich durch die Wandung des Rotorgehäuses erstreckenden Zinken zusammen. Während der Drehung des Rotorgehäuses werden die an der Unterseite des Rotorgehäuses am weitesten herausragenden Zinken in der Förderrichtung der Strohschüttler bewegt und reißen die Strohmatte auseinander, wodurch eine Erhöhung der Abscheidung noch im Stroh befindlicher Körner stattfindet. Zur Steigerung der Abscheidung sind die Zinken entweder über Taumelscheiben auf der Welle befestigt, oder die Welle wird mittels eines Exzentermotors ständig axial bewegt. Auf diese Weise bewegen sich auch die freien Zinkenenden in der Axialrichtung des Rotors und reißen die Strohmatte noch weiter auseinander.

Aus der DE-OS-22 35 061 geht ein Mähdrescher hervor, in dessen Bereich zwischen Strohschüttlern und einer Strohhaube sich ein Pick-up-ähnlicher Überkopfförderer befindet. Dieser Überkopfförderer nimmt in einem vorderen Bereich der Strohschüttler Stroh auf und gibt es dahinter wieder ab. In dem darunter befindlichen Bereich kann das Kurzstroh abgeschieden werden. Der Überkopfförderer kann auch im Anschluß an einen Schüttler vorgesehen werden. Eine ähnliche Vorrichtung ist auch aus der FR-PS-1.473.891 und der DE-AS-2 103 981 bekannt, wobei die dortige Vorrichtung zusätzlich in eine Außerbetriebsstellung gebracht werden kann.

Gemäß der GB-PS-698,324 ist oberhalb eines Strohschüttlers ebenfalls ein Überkopfförderer vorgesehen, der aus einer Trommel und darauf nachlaufend ausgerichteten Zahnleisten besteht.

Die DE-OS-2 431 588 lehrt einen Zusatzabscheider im Abgabebereich der Dreschvorrichtung eines Mähdreschers, der auf einem Rotor beweglich bzw. federnd gelagerte Zinken aufweist, die das Erntegut unterschlächtig fördern. Die Zinken sind zwar nachgiebig, erstrecken sich aber stets mit ihrer vollen Länge in das Erntegut. Es wird auch vorgeschlagen, mehrere derartiger Zusatzabscheider hintereinander vorzusehen.

Der DE-C3-42 09 020 zufolge wird eine Überkopf fördernde Abscheidetrommel zwischen eine Dreschvorrichtung und Strohschüttler eingefügt, die das aus der Dreschvorrichtung kommende gedroschene Gut auffängt und abbremst, so daß in dem Gutgemenge enthaltene Körner auf die Oberfläche der Abscheidetrommel zu liegen kommen, während das Stroh auf die Strohschüttler weitergegeben wird.

Die DE-A1-41 27 118 zeigt einen Mähdrescher mit Strohschüttlern und einem sich oberhalb von diesen befindlichem sogenannten Querschüttler, der das Erntegut unterschlächtig fördert. Vor dem Querschüttler ist ein ebenfalls unterschlächtig förderndes Mitnehmerband vorgesehen, das die Gutmatte aufreißt und mit hoher Geschwindigkeit in den Spalt zwischen den Querschüttler und den Strohschüttler einwirft.

Das der Erfindung zugrunde liegende Problem wird darin gesehen, daß insbesondere bei Mähdreschern mit einer großen Durchsatzleistung noch keine voll befriedigende zusätzliche Abscheidevorrichtung gefunden ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird das Erntegutgemenge über eine längere Strecke intensiv bearbeitet. Durch den Übergang zwischen wenigstens zwei Rotoren tritt ein ständiger Beschleunigungsund Abbremseffekt auf, da die Gutmatte nicht wie ein homogenes Band transportiert werden kann. Diese Bewegungsänderungen bewirken das Ausfallen von noch im Stroh enthaltenen Körnern. Dieser Effekt tritt bei jeder möglichen Betriebsweise der beiden Rotoren auf.

Wenn die Rotoren gleichsinnig drehen, was sowohl oberschlächtig als auch unterschlächtig fördernd möglich ist, findet eine schonende Behandlung des Strohs statt, was insbesondere bei sehr trockenem Stroh von Vorteil ist, da dann die Abscheidung nicht durch einen hohen Kurzstrohanteil überlastet wird. Außerdem kann dieses Stroh in einem späteren Verarbeitungsprozeß besser gehandhabt werden.

Gegensinnig drehende Rotoren, von denen also eine eine oberschlächtige und eine eine unterschlächtige Förderung bewirkt, sind dort von Vorteil, wo eine hohe Einwirkung auf das Gutgemenge erforderlich ist und/oder es auf die Strohqualität nicht ankommt. Diese Anordnung führt auch zu einer sicheren Anlage des Strohs an den Strohschüttlern, was z. B. bei Raps oder Langstroh Verstopfungen vermeidet.

Da die Konsistenz des Ernteguts und somit seine Steifheit oftmals wechseln können, wird dessen Handhabung dadurch verbessert, daß die Aggressivität der Mitnehmerförderung verändert werden kann.

Eine Erhebung auf den Schüttlern, die sich zwischen die Umfangslinien beider Rotoren erstreckt, bewirkt, daß das Gutgemenge erneut abgebremst wird und somit eine zusätzliche Abscheidung entsteht. Wenn die Erhebung mit Abscheideöffnungen versehen ist, können die Körner direkt nach dem Trennvorgang entfallen. Die Erhebung bewirkt auch eine zuverlässige Förderung des Ernteguts, so daß es nicht zu Verstopfungen in dem Zwickelbereich zwischen zwei Rotoren kommt.

Durch die Möglichkeit, die Drehrichtung und/oder die Exzentrizität der Mitnehmer, d. h. das Maß ihres Überstands über das Rotorgehäuse, zu verändern, kann eine weitere Anpassung an die Gutbedingungen und -arten erfolgen.

Eine Abstandsänderung zwischen den Rotoren und den Strohschüttlern kann helfen, den Rotor z. B. beim Drusch von Mais außer Betrieb zu setzen oder den Einwirkungsgrad der Mitnehmer an das jeweils Erforderliche anzupassen.

Die Verwendung einer Leitvorrichtung oberhalb der Rotoren, jedenfalls aber oberhalb des ersten Rotors gewährleistet insbesondere bei hartem, störrigem Halmgut, daß Verstopfungen unterbleiben. Vielmehr wird das Erntegut kontinuierlich an der Wand entlang geführt.

Ein schneller als die Strohschüttler fördernder Rotor bewirkt, daß die von ihm ergriffene Strohmatte verdünnt und somit abscheidungsfreundlicher wird.

In der Zeichnung sind nachfolgend mehrere näher beschriebene Ausführungsbeispiele der Erfindung dargestellt. Es zeigt:
- Fig. 1: einen erfindungsgemäßen Mähdrescher mit einem Rotationsabscheider,
- Fig. 2: den Rotationsabscheider nach einer ersten Ausführungsform,
- Fig. 3: den Rotationsabscheider nach einer zweiten Ausführungsform und
- Fig. 4: den Rotationsabscheider nach einer dritten Ausführungsform.

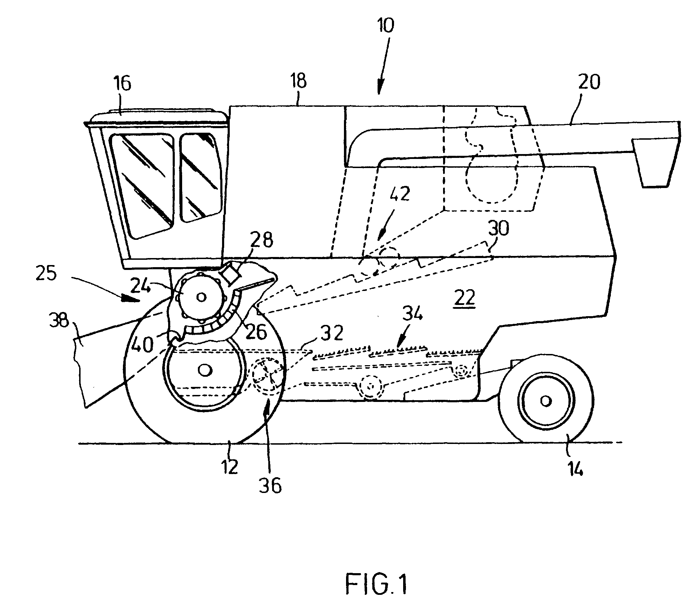

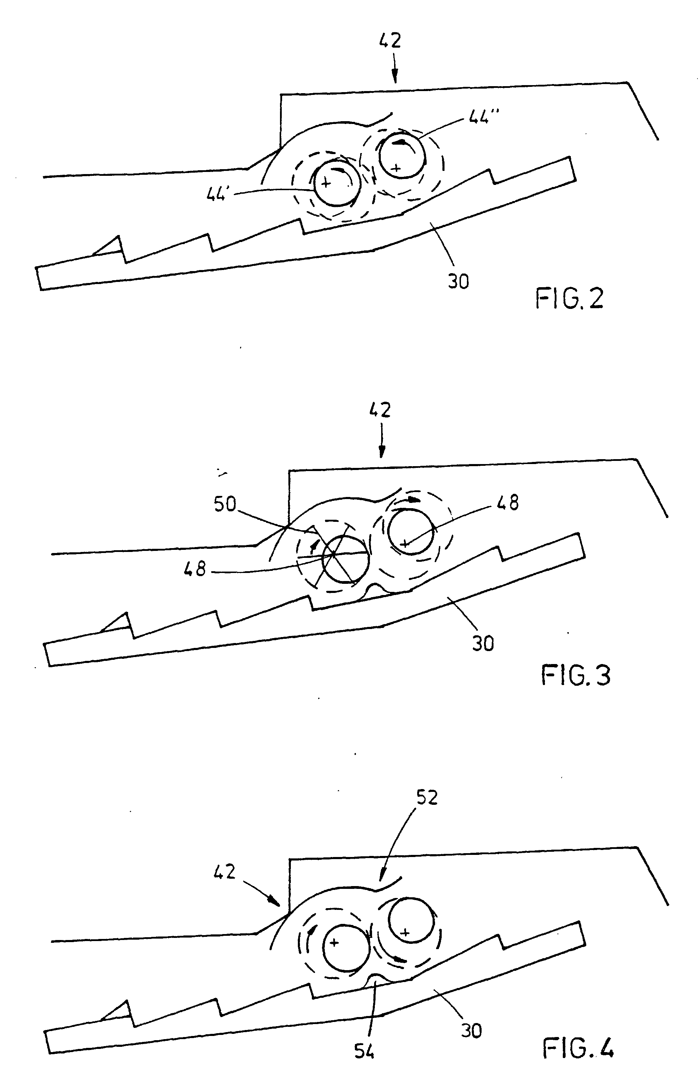

Ein in Figur 1 gezeigter Mähdrescher 10 ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Strohschüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Strohschüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist. Oberhalb der Strohschüttler 30 ist ein Rotationsabscheider 42 vorgesehen, die insbesondere mit Blick auf die Figuren 2 bis 4 näher beschrieben ist.

Der Rotationsabscheider 42 ist vorgesehen, um das auf den Strohschüttlern 30 von der Dreschvorrichtung 25 herangeführte Erntegutgemenge aufzulockern, so daß in diesem enthaltene Körner durch die nicht gezeigten Abscheideöffnungen in den Schüttlerbelägen austreten und auf die Siebe 34 gelangen können. Hierzu enthält der Rotationsabscheider 42 wenigstens zwei unmittelbar hintereinander, d. h. in Reihe geschaltete Rotoren 44, deren Abstand so gewählt ist, daß das den stromaufwärts liegenden Rotor 44' verlassende Erntegut von dem stromabwärts gelegenen Rotor 44'' erfaßt werden kann.

Jeder Rotor 44 besteht aus einem Rotorgehäuse 46, einer darin exzentrisch gelagerten Welle 48 und auf der Welle 48 drehbar befestigten Mitnehmer 50 in der Form von starren Fingern oder federnden Zinken.

Jedes Rotorgehäuse 46 ist mit der Welle 48 und den Mitnehmern 50 wie ein üblicher Trommelförderer, z. B. in der Mitte einer Einzugsschnecke eines Schneidwerks oder einer Pick-up gestaltet, so daß auf eine eingehende Beschreibung verzichtet werden kann.

Das Rotorgehäuse 46 ist als ein Rohr ausgebildet, das über seine gesamte Länge und in verschiedenen umfangsmäßig verteilten Reihen mit Austrittsöffnungen für die Mitnehmer 50 versehen ist. Das Rotorgehäuse 46 ist beiderseits in den Seitenwänden des Rahmens 22 drehbar gelagert und wird von wenigstens einer Seite her angetrieben.

In diesem speziellen Ausführungsbeispiel kann die Drehrichtung und die Umdrehungszahl jedes Rotors 44, d. h. dessen Rotorgehäuses 46 mittels eines entsprechenden nicht dargestellten Getriebes, z. B. einem Umschlingungsgetriebe und/oder einem Planetengetriebe, verändert werden.

Die Welle 48 ist ebenfalls in dem Rahmen 22 gelagert und erstreckt sich in der Richtung der Längsmittenachse des Rotorgehäuses 46 aber parallel zu dieser. Wenn auch die relative Lage der Welle 48 während des Betriebs grundsätzlich unveränderlich ist, so kann zur Änderung der Aggressivität der Mitnehmer 50 eine Lageänderung der Welle 48 aber grundsätzlich vorgenommen werden. Hierzu kann die Welle 48 in bekannter Weise auf Stellhebeln oder dergleichen gelagert und um einen Schwenkpunkt bewegt werden, so daß sich der Abstand zu allen Austrittsstellen der Mitnehmer 50 aus dem Rotorgehäuse 46 verändert.

Die Mitnehmer 50 sind gerade ausgebildet und bestehen aus Federstahl, so daß die Rotoren 44 in beiden Richtungen betrieben werden können. Sollen die Rotoren 44 jeweils nur in einer Richtung betrieben werden, können die Mitnehmer 50 auch nachlaufend gekrümmt ausgebildet sein. Auf bekannte und daher nicht gezeigte Weise sind die Mitnehmer 50 mittels Lagern auf der Welle 48 innerhalb des Rotorgehäuses 46 drehbar gelagert und bewegen sich während des Umlaufs des Rotorgehäuses 46 im wesentlichen radial durch dessen Wandung zwischen zwei Endstellungen.

Die Darstellung in den Figuren 2 bis 4 zeigt die Rotoren 44 jeweils in unterschiedlicher Richtung angetrieben. Da jede Drehrichtung eine bestimmte und andere Stellung der Mitnehmer 50 erfordert, geht mit jeder Drehrichtung auch eine Änderung des Bewegungsfeldes der Mitnehmer 50 einher, wie dies dargestellt ist.

Oberhalb des Rotationsabscheiders 42 ist eine Leitvorrichtung 52 vorgesehen, die für einen kontinuierlichen Fluß des Ernteguts sorgt. Diese Leitvorrichtung 52 kann sowohl aus einem Blech, jedenfalls einer glatten Fläche als auch aus gebogenen Mitnehmern bestehen, die eine in der Zeichnung dargestellte Form einnehmen, die dem Bewegungsfeld der Mitnehmer 50 folgt.

Die Strohschüttler 30 sind in ihrem Bereich unterhalb des Rotationsabscheiders 42 vorteilhafterweise, wenn auch nicht notwendig, ebenfalls an das Bewegungsfeld der Mitnehmer 50 bzw. den zu erwartenden Gutfluß angepaßt. Hierzu ist bei der Ausführung nach Figur 2, in der beide Rotoren 44 unterschlächtig fördern, auf den Strohschüttlern 30 keine Steilstufe angeordnet, vielmehr verlaufen die Strohschüttler 30 in diesem Bereich flach. Wie im übrigen Bereich sind die Strohschüttler 30 auch unterhalb des Rotationsabscheiders 42 mit durchlässigen Schüttlerbelägen versehen.

Bei dem Ausführungsbeispiel nach den Figuren 3 und 4 ist eine Erhebung 54 vorgesehen, die buckelförmig ausgebildet ist und sich in den Zwickelbereich zwischen zwei Bewegungsfelder der Mitnehmer 50 hinein erstreckt. Da die Strohschüttler 30 eine oszillierende Bewegung ausführen, ist es nicht möglich, den Zwickelbereich ganz mit einer Erhebung 54 auszufüllen.

Die drei Ausführungsformen der Figuren 2 bis 4 unterscheiden sich im wesentlichen durch die Drehrichtung der Rotoren 44. So drehen in Figur 2 beide Rotoren 44 in derselben Richtung und fördern das Erntegut unterschlächtig. Die Erntegutmatte wird folglich sicher und in Anlage an den Schüttlerbelägen über die Strohschüttler 30 gezogen.

In Figur 3 ist eine Version gezeigt, bei der beide Rotoren 44 oberschlächtig, d. h. Überkopf fördern. Die vertikale Bewegung des Dreschguts wird dabei nach unten von den Rotorgehäusen 46 und nach oben durch die Leitvorrichtung 52 begrenzt. In den unteren Zwickelbereich erstreckt sich die Erhebung 54, die auch dafür sorgt, daß kein Gut mehr zurückgefördert wird. Infolge dieser Ausführung wird die Erntegutmatte von dem vorderen Rotor 44' zu dem rückwärtigen Rotor 44'' weitergegeben, wobei es den Spalt zwischen diesen passiert und Körner nach unten herausfallen läßt.

Bei dem Ausführungsbeispiel nach Fig. 4 ist der vordere Rotor 44' oberschlächtig und der rückwärtige Rotor 44'' unterschlächtig fördernd angetrieben, so daß das Erntegut eine S-förmige Bewegungsbahn durchläuft, auf der es stets geführt wird und keine Möglichkeit besitzt, sich aufzubauen und eine Verstopfung hervorzurufen. Die Richtungsänderung wie auch der penetrante Eingriff der Mitnehmer 50 führt zu einem erhöhten Abscheidungsgrad.

Die Ausbildung und Anordnung der Leitvorrichtung 52 und der Erhebung 54 sind bei den Ausführungsbeispielen der Figuren 3 und 4 gleich.

## Patentansprüche

1. Mähdrescher (10) mit Strohschüttlern (30) und einem oberhalb der Strohschüttler (30) vorgesehenen Rotationsabscheider (42), **dadurch gekennzeichnet, daß** der Rotationsabscheider (42) wenigstens zwei unmittelbar hintereinander angeordnete Rotoren (44', 44'') mit darin exzentrisch gelagerten Mitnehmern (50) aufweist.

2. Mähdrescher nach Anspruch 1, **dadurch gekennzeichnet, daß** die Rotoren (44', 44'') gleichsinnig drehen.

3. Mähdrescher nach Anspruch 1, **dadurch gekennzeichnet, daß** die Rotoren (44', 44'') gegensinnig drehen.

4. Mähdrescher nach einem oder mehreren der vorherigen Ansprüche, **dadurch gekennzeichnet, daß** die Exzentrizität der Mitnehmer (50) einstellbar ist.

5. Mähdrescher nach einem oder mehreren der vorherigen Ansprüche, **dadurch gekennzeichnet, daß** bei wenigstens einem oberschlächtig fördernden Rotor (44', 44'') der Abscheidebereich der Strohschüttler (30) zwischen den Rotoren (44', 44'') mit einer in den Freiraum zwischen den Rotoren (44', 44'') ragenden und insbesondere mit Abscheideöffnungen versehenen Erhebung (54) versehen ist.

6. Mähdrescher nach einem oder mehreren der vorherigen Ansprüche, **dadurch gekennzeichnet, daß** die Exzentrizität der Mitnehmer (50) und/oder die Drehrichtung der Rotoren (44', 44'') veränderbar ist.

7. Mähdrescher nach einem oder mehreren der vorherigen Ansprüche, **dadurch gekennzeichnet, daß** der Abstand der Rotoren (44',44'') zu den Strohschüttlern'(30) änderbar ist.

8. Mähdrescher nach einem oder mehreren der vorherigen Ansprüche, **dadurch gekennzeichnet, daß** oberhalb der Rotoren (44', 44'') eine Leitvorrichtung 52 vorgesehen ist.

9. Mähdrescher nach einem oder mehreren der vorherigen Ansprüche, **dadurch gekennzeichnet, daß** die Fördergeschwindigkeit der Rotoren (44', 44'') höher ist als die der Strohschüttler (30).

## Claims

1. A combine (10) having straw walkers (30) and a rotary separator (42) located above the straw walkers (30), **characterized in that** the rotary separator (42) comprises at least two rotors (44', 44") arranged one behind the other, the rotors being provided with grippers (50) eccentrically supported in the rotors (44', 44").

2. A combine according to claim 1, **characterized in that** the rotors (44', 44") rotate in the same direction.

3. A combine according to claim 1, **characterized in that** the rotors (44', 44") rotate in opposite directions.

4. A combine according to one or more of the preceding claims, **characterized in that** the eccentricity of the grippers (50) can be adjusted.

5. A combine according to one or more of the preceding claims, **characterized in that** at at least one overshot feeding rotor (44', 44") the separating region of the straw walkers (30) is provided between the rotors (44', 44") with a projection (54) extending into a space between the rotors (44', 44") and especially provided with separating openings.

6. A combine according to one or more of the preceding claims, **characterized in that** the eccentricity of the grippers (50) and/or the rotational direction of the rotors (44', 44") can be altered.

7. A combine according to one or more of the preceding claims, **characterized in that** the distance of the rotors (44', 44") to the straw walkers (30) can be altered.

8. A combine according to one or more of the preceding claims, **characterized in that** above the rotors (44', 44") a guide arrangement (52) is provided.

9. A combine according to one or more of the preceding claims, **characterized in that** the feeding speed of the rotors (44', 44") is higher than the feeding speed of the straw walkers (30).

## Revendications

1. Moissonneuse-batteuse (10) présentant des tables (30) de secouage de paille et un séparateur rotatif (42) prévu au-dessus des tables (30) de secouage de paille, **caractérisée en ce que** le séparateur rotatif (42) présente au moins deux rotors (44', 44") disposés directement l'un derrière l'autre et dotés de dispositifs d'entraînement (50) qui y sont montés de manière excentrique.

2. Moissonneuse-batteuse selon la revendication 1, **caractérisée en ce que** les rotors (44', 44") tournent dans le même sens.

3. Moissonneuse-batteuse selon la revendication 1, **caractérisée en ce que** les rotors (44', 44") tournent dans des sens opposés.

4. Moissonneuse-batteuse selon l'une ou plusieurs des revendications précédentes, **caractérisée en ce que** l'excentricité des dispositifs d'entraînement (50) peut être ajustée.

5. Moissonneuse-batteuse selon l'une ou plusieurs des revendications précédentes, **caractérisée en ce que** dans le cas d'au moins un rotor (44', 44") de transport vers le haut, la zone de séparation des tables (30) de secouage de paille est dotée entre les rotors (44', 44") d'un relèvement (54) qui déborde dans l'espace libre situé entre les rotors (44', 44") et qui est en particulier doté d'ouvertures de séparation.

6. Moissonneuse-batteuse selon l'une ou plusieurs des revendications précédentes, **caractérisée en ce que** l'excentricité des dispositifs d'entraînement (50) et/ou le sens de rotation des rotors (44', 44") peuvent être modifiés.

7. Moissonneuse-batteuse selon l'une ou plusieurs des revendications précédentes, **caractérisée en ce que** la distance entre les rotors (44', 44") et les tables (30) de secouage de paille peut être modifiée.

8. Moissonneuse-batteuse selon l'une ou plusieurs des revendications précédentes, **caractérisée en ce qu'**un dispositif de guidage (52) est prévu au-dessus des rotors (44', 44").

9. Moissonneuse-batteuse selon l'une ou plusieurs des revendications précédentes, **caractérisée en ce que** la vitesse de transport des rotors (44', 44") est plus élevée que celles des tables (30) de secouage de paille.
